# EUROPÄISCHE PATENTANMELDUNG

(11) **EP 1 454 705 A1**
(43) Veröffentlichungstag der Anmeldung: **08.09.2004**
(21) Anmeldenummer: 03004785.6
(22) Anmeldetag: 05.03.2003
(51) Int. Cl.: B23K 26/42, B23K 26/32

(54) **Verfahren zur thermischen Bearbeitung eines Werkstückes mit einem Werkstückgrundkörper aus Metall, insbesondere aus Aluminium**

(71) Anmelder: TRUMPF Werkzeugmaschinen GmbH + Co. KG, 71254 Ditzingen (DE)
(72) Erfinder: Wessner Michael, 70839 Gerlingen (DE)
(74) Vertreter: Bäcker, Rüdiger

(57) **Zusammenfassung**

Die Erfindung betrifft ein Verfahren zur thermischen Bearbeitung eines Werkstücks. Das Werkstück umfasst einen Werkstückgrundkörper (1) aus einem Metall, insbesondere aus Aluminium, und eine Oberflächenbeschichtung (2) wie beispielsweise eine Oxidschicht und soll mittels eines Laserstrahls (3) bearbeitet werden. Die Oberflächenbeschichtung (2) wird vor und/oder während der Laserbearbeitung mit Hilfe eines Plasmas abgetragen. Die Werkstückoberfläche (6) des Werkstückgrundkörpers (1) wird mit Hilfe des Plasmas gereinigt und vorbehandelt.

## Beschreibung

Die Erfindung betrifft ein Verfahren zur thermischen, mit Hilfe eines Laserstrahls durchführbaren Bearbeitung eines Werkstücks, welches einen Werkstückgrundkörper aus einem Metall, insbesondere aus Aluminium, und eine Oberflächenbeschichtung oder Oberflächenverunreinigung wie beispielsweise eine Oxidschicht umfasst.

Aluminium wird derzeit hauptsächlich mit Hilfe des Lichtbogenschweißverfahrens MIG bzw. WIG geschweißt, zunehmend auch mittels Laserbearbeitung.

Beim Laserschweißen von Aluminium ergeben sich folgende Probleme:
- Das Laserschweißen von Aluminium erfordert bisher in der Regel höhere Laserleistungen (beispielsweise beim CO₂-Laser eine Laserleistung größer 4 KW), weil der Werkstoff Aluminium im Vergleich zum Werkstoff Stahl einen hohen Reflexions- und einen niedrigen Absorptionsgrad aufweist.
- Eine Oxidschicht (wie beispielsweise Al₂O₃) an der Oberfläche des Werkstücks hat einen deutlich höheren Schmelzpunkt als der reine Werkstoff Aluminium. Es resultiert hieraus eine Barriere zum Einbringen von thermischer Energie in den Werkstückgrundkörper aus reinem Aluminium.
- Aluminium ist ein guter Wärmeleiter, welcher die eingebrachte Wärmeenergie schnell abführt, so dass zusätzlich Energie aufgewendet werden muss, um das Schmelzbad flüssig zu halten.

Der Anmelder hat sich die Aufgabe gestellt, den Energieaufwand oder den Leistungsbedarf des Lasers beim Laserschweißen mit Aluminium zu verringern.

Diese Aufgabe wird durch ein Verfahren zur thermischen Bearbeitung eines Werkstücks, welches einen Werkstückgrundkörper aus einem Metall, insbesondere aus Aluminium, und eine Oberflächenbeschichtung oder Verunreinigung wie beispielsweise eine Oxidschicht umfasst, mit Hilfe eines Laserstrahls gelöst, wobei die Werkstückoberfläche des Werkstückgrundkörpers durch Abtrag der Oberflächenbeschichtung mit Hilfe des Plasmas vor und/oder während der Laserbearbeitung gereinigt und vorbehandelt wird.

Durch die Kinetik der Gasionen wird die oben erwähnte, das Anschmelzen der Werkstückoberfläche und letztlich das Einkoppeln der Laserenergie in den Werkstückgrundkörper behindernde Barriere (Oxidschicht) durch Abtrag schnell zerstört, ohne dass eine wesentliche Erwärmung des Werkstückgrundkörpers erfolgt. Die Werkstückoberfläche soll durch die Plasma-Behandlung maximal auf eine Temperatur unterhalb der Schmelztemperatur des Werkstücks erwärmt werden, so dass sicher gestellt ist, dass die Plasma-Behandlung nicht zum thermischen Bearbeiten des Werkstückgrundkörpers, insbesondere nicht zu dessen Aufschmelzen, eingesetzt wird. Die thermische Bearbeitung (Schweißnaht) des Werkstückgrundkörpers entsteht nur durch den Laser.

Die Plasmaerzeugung kann auf unterschiedliche Arten realisiert werden. Bevorzugt ist, dass das Plasma durch eine an eine Wechselspannung angeschlossene Wolframelektrode oder Titanelektrode und durch Zuführung eines Inertgases (Argon, Helium, Argon-Helium) erzeugt wird.

Die bevorzugte Anwendung der Erfindung wird in der Bearbeitung von Werkstücken mit einem Werkstückgrundkörper aus Aluminium oder einem vergleichbaren Metall oder Metalllegierung gesehen, bei denen eine Al₂O₃-Schicht oder eine vergleichbare Schicht vorhanden ist.

Wenn sich die Bearbeitungsbereiche des Laserstrahls und des Plasmas überschneiden, kann mit Hilfe des Plasmas Energie bzw. Wärme in den bereits aufgeschmolzenen Bereich des Werkstückgrundköpers nach Abtrag der Oxidschicht eingebracht werden. Die benötigte Laserleistung zur Aufrechterhaltung der Schmelze wird verringert. Die verbesserte Aufrechterhaltung der Schmelze wirkt sich auch hinsichtlich einer Reduzierung einer Porenbildung positiv aus.

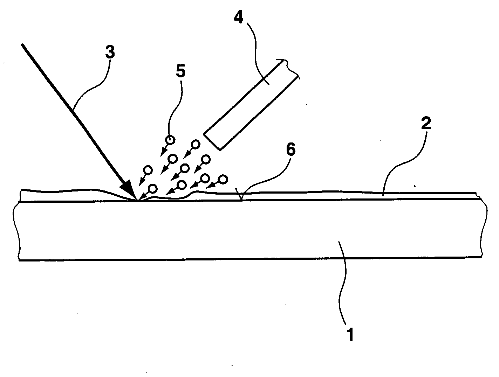

Ein Ausführungsbeispiel der Erfindung ist in der Zeichnung schematisch dargestellt und wird nachfolgend mit Bezug zur Figur der Zeichnung näher erläutert.

Die **Figur** zeigt eine vereinfachte prinzipielle Darstellung einer thermischen Bearbeitung eines Werkstücks mit einem Werkstückgrundkörper aus Aluminium.

Aus der Figur ist ersichtlich, dass ein Werkstück, beispielsweise ein Aluminiumblech, vor der Bearbeitung einen Werkstückgrundkörper **1** aus Aluminium und eine den Werkstückgrundkörper 1 bedeckende Oxidschicht **2** aus Al₂O₃ umfasst, welche bei der thermischen Bearbeitung des Werkstücks berücksichtigt werden muss. Aluminium besitzt einen Schmelzpunkt von 660 °C, während die Oxidschicht aus Al₂O₃ bei 2500 °C schmilzt. Der Bearbeitung des Werkstücks durch einen Laserstrahl **3** zum Schweißen des Werkstückgrundkörpers 1 geht daher eine Vorbehandlung der Aluminiumoxidschicht 2 voraus. Es wird eine Wechselspannung zwischen dem Werkstück und einer nicht abbrennbaren Wolframelektrode **4** anlegt, während ein inertes Prozessgas wie Argon, Helium oder eine Mischung aus beiden Gasen zugeführt wird. Durch die elektrische Energie bzw. das elektrische Feld werden aus neutralen Gasatomen Gasionen **5** und in der Figur nicht dargestellte Elektronen erzeugt. Positive Gasionen 5 werden zur Kathode (Werkstück 1) und Elektronen werden zur Anode (Wolframelektrode 4) beschleunigt. Die beschleunigten Gasionen 5 setzten auch an der Oxidschicht 2 weitere Elektronen frei. Zusammenstösse zwischen Elektronen und Gasatomen führen zu weiteren Ionisationen. Der Vorgang setzt sich lawinenartig bis zur vollständigen Gasionisation (Plasma) fort. Verschiedene Stoßprozesse führen dabei zur Lichtemission (Lichtbogen). Durch geeignete Wahl der Prozessparameter (niedrige Wechselspannung, kontrollierte Gaszufuhr) und der Prozessanordnung (Winkel und Abstand der Wolframelektrode 4, Überschneidung des Wirkungsbereichs des Plasmas und des Laserstrahls 3) kann erreicht werden, dass die Oxidschicht 2 abgetragen wird, ohne dass der Werkstückgrundkörper 1 zunächst aufgeschmolzen wird. Das erzeugte Plasma wird nur zur Reinigung der Werkstückoberfläche **6** des Werkstückgrundkörpers 1 durch Abtrag der Oxidschicht 2 eingesetzt. Die Oxidschicht 2 wird durch die Kinetik der auftreffenden Gasionen 5 weitgehend "mechanisch" bearbeitet.

Das Plasma trägt nur indirekt zur thermischen Bearbeitung des Werkstückgrundkörpers 1 bei, indem vorbereitende "mechanische" Verfahrensschritte ("Sputtern") durchgeführt werden. Die eigentliche thermische Bearbeitung des Werkstückgrundkörpers 1 findet durch den Laserstrahl 3 statt. Nach dem Abtrag der Oxidschicht wird die Einkopplung der Laserenergie in die Werkstückoberfläche 6 des Werkstückgrundkörpers 1 durch die eine Laserbearbeitung begleitende Plasma-Behandlung unterstützt. Die Werkstückoberfläche 6 wird unmittelbar vor der Laserbearbeitung in situ gereinigt und sauber gehalten, solange die Laserbearbeitung an dieser Stelle stattfindet.

Bei Beginn des eigentlichen Schweißprozesses stabilisiert das Plasma den Laserschweißprozess und kann zusätzlich Wärme in das Werkstück einbringen, um das Schmelzbad besser und länger flüssig zu halten, ohne die Laserleistung zu erhöhen.

### BEZUGSZEICHENLISTE

- 1: Werkstück
- 2: Oxidschicht
- 3: Laserstrahl
- 4: Wolframelektrode
- 5: Gasion
- 6: Werkstückoberfläche

## Patentansprüche

1. Verfahren zur thermischen Bearbeitung eines Werkstücks, welches einen Werkstückgrundkörper (1) aus einem Metall, insbesondere aus Aluminium, und eine Oberflächenbeschichtung (2) oder Oberflächenverunreinigung wie beispielsweise eine Oxidschicht umfasst, mit Hilfe eines Laserstrahls (3), **dadurch gekennzeichnet, dass** die Werkstückoberfläche (6) des Werkstückgrundkörpers (1) durch Abtrag der Oberflächenbeschichtung (2) mit Hilfe eines Plasmas vor und/oder während der Laserbearbeitung gereinigt und vorbehandelt wird.

2. Verfahren nach Anspruch 1, **dadurch gekennzeichnet, dass** das Plasma durch eine an eine Wechselspannung angeschlosseneElektrode beispielsweise aus Wolfram oder Titan und durch Zuführung eines Inertgases erzeugt wird.

3. Verfahren nach einem der vorhergehenden Ansprüche, **dadurch gekennzeichnet, dass** das Werkstück aus Aluminium mit einer Oxidschicht wie beispielsweise Al₂O₃ besteht.

4. Verfahren nach einem der vorhergehenden Ansprüche, **dadurch gekennzeichnet, dass** sich die Bearbeitungsbereiche des Laserstrahls (3) und des Plasmas überschneiden.
